# EUROPEAN PATENT APPLICATION

(11) **EP 1 089 505 A1**
(43) Date of publication of application: **04.04.2001**
(21) Application number: 00911373.9
(22) Date of filing: 27.03.2000
(51) Int. Cl.: H04L 12/56, H04L 12/28

(54) **PACKET TRANSMITTER**

(30) Priority: 29.03.1999 JP 8698199
(71) Applicant: MITSUBISHI DENKI KABUSHIKI KAISHA, Tokyo 100-8310 (JP)
(72) Inventor: SENO, Shoichiro, Chiyoda-ku, Tokyo 100-8310 (JP); SAITO, Yuzuru, Chiyoda-ku, Tokyo 100-8310 (JP); KOBAYASHI, Hiroyuki, Chiyoda-ku, Tokyo 100-8310 (JP)
(74) Representative: Pfenning, Meinig & Partner GbR
(86) International application number: JP0001855
(87) International publication number: WO0059162

(57) **Abstract**

A packet inputted becomes one or more ATM cells obtained by dividing by a cell generation circuit (2), and cell header set sections (12-1 to 12-n) refer to a specific field in a packet contained in an ATM cell sequence generated by the cell generation circuit (2) for each AAL frame. A value of a specific field in an ATM cell header corresponding to the value of the specific field in the packet is set for each AAL frame in the specific field in each ATM cell header corresponding to the specific field in the packet.

## Description

### TECHNICAL FIELD

The present invention relates to a packet transmitter in which an input packet is AAL (ATM Adaptation Layer) framed, and an ATM cell sequence is formed from the AAL framed data so as to transmit it to an ATM network.

### BACKGROUND ART

To date, a cell transmitter has been employed for the case in which a packet defined by the IP (Internet Protocol) or the like is transmitted to an ATM network. This cell transmitter generates a packet or an AAL type 5 frame constituted of one or more ATM cells (53 bytes).

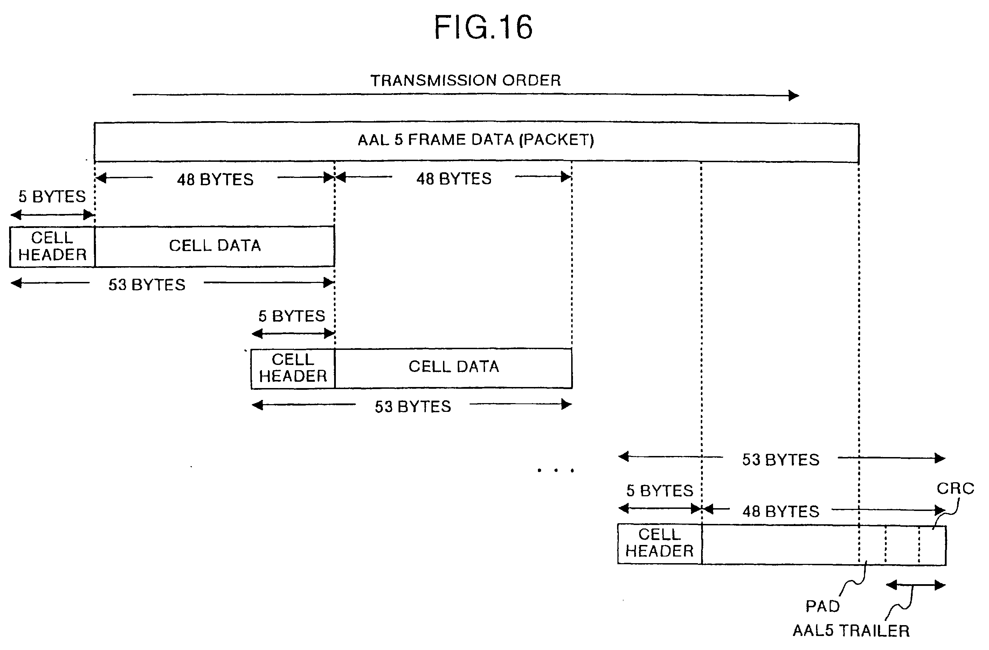

Fig. 16 is a view showing a relationship between a packet and an AAL-5 frame. As shown in Fig. 16, the packet has an arbitrary data length, and when the packet is transmitted, the packet inputted in an AAL is divided into 48 bytes. A 5 byte ATM cell header (cell header) is added to the divided 48 byte data in an ATM layer so that the 48 byte data are transmitted as an ATM cell sequence of a fixed length.

This ATM cell sequence is the AAL-5 frame. Here, since the packet has an arbitrary length, an odd data length is generated at the time of dividing of 48 bytes. To this portion, a pad PAD is added, and an AAL trailer containing a CRC that is an error detection code for the entire frame is added at the tail end. The CRC is 32 bits.

As the protocol of the AAL, there are AAL type 1 to AAL type 5. The AAL type 1 performs a class A service such as voice, picture of a constant rate. The AAL type 2 performs a class B service such as voice, picture of a variable rate. The AAL type 3 to 5 perform a class C service such as data. Specifically, the AAL type 5 (AAL-5) does not have extra header and trailer and is a simple protocol.

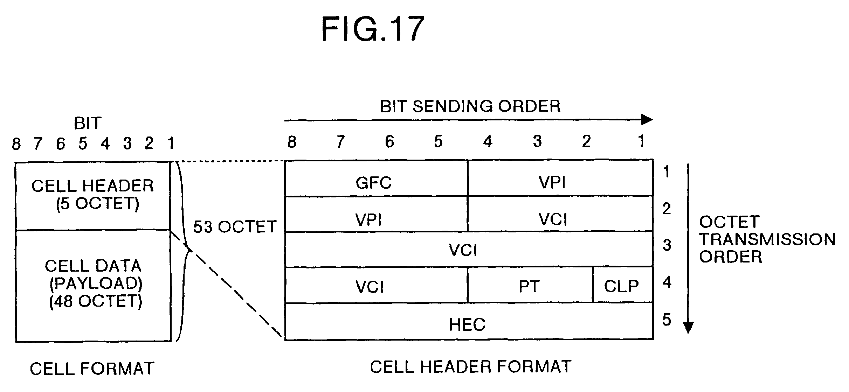

As shown in Fig. 17, the ATM cell is constituted of a 5 byte cell header and a 48 byte cell data. The cell header has fields of GFC (general flow control), VPI/VCI (virtual path identifier/virtual channel identifier), PT(payload type), CLP (cell loss priority), and HEC (header error control). This CLP indicates a traffic class of a cell. When the CLP is "1," the cell is easy to be discarded, and when the CLP is "0," the cell is not easy to be discarded. Due to this traffic class given to a cell, a priority discard function is achieved in which a cell which is not important is given priority to be discarded when a congestion condition occurs in the ATM network by a traffic control in the ATM network.

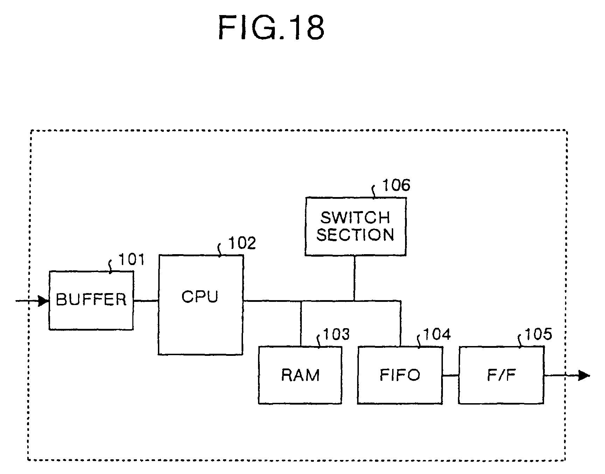

Here, a conventional cell generation circuit will be explained referring to Fig. 18. Fig. 18 is a block diagram showing the configuration of a conventional cell generation circuit. As shown in Fig. 18, a buffer 101 temporarily stores input packet data. A CPU 102 performs entire control of cell generation. A RAM 103 temporarily stores cell-processed data and the like. A FIFO 104 temporarily stores the data transmitted as a cell. An F/F (flip flop) 105 regulates timing to output a cell to the ATM network side. A switch section 106 adds header information to a cell. At the present time, a LSI gathering these structural elements in one chip has become available in the market.

The cell generation device shown in Fig. 18 supports one or more virtual channels (VCs) in the ATM network, and control information for generating cell header information different for each virtual channel VC is set in advance. The CPU 102 divides and reads a packet stored in the buffer 101 for each 48 bytes that is a unit of the cell data and stores it in the RAM 103. Then, the CPU 102 adds a cell header for the cell data unit based on the given control information, employing the switch section 106. In the AAL-5 frame, the AAL trailer and, if necessary, PAD are added to the end of the frame. Thereafter, the ATM cell is transmitted and outputted via the FIFO 104 and the F/F 105.

However, in the conventional cell generation circuit described above, there is a problem that although the value of the CLP bit representing how easy the cell is discarded can be set in the cell header for each AAL-5 frame, and it is considered that an ATM network has a function by which how easy a cell is discarded is reflected at the time of relaying the value of the CLP as an extension of ATM related recommendations in ITU-T (International Telecommunication Union, Telecommunication Standardization Section), since the cell header containing the CLP is added according to the control information set in advance, the value of the CLP is fixed for each cell generation circuit, and thus the CLP value of a cell of the AAL-5 frame generated from a packet cannot be set independently for each packet. Thus, it is difficult to always transmit an appropriate ATM cell corresponding to the information in a packet or to an ATM network to the ATM network.

Accordingly, it is an object of the present invention to obtain a packet transmitter in which setting of an ATM cell corresponding to the information in an input packet or to a communication condition of an ATM network is performed simply, easily, and flexibly for each AAL frame to perform transmission.

### DISCLOSURE OF THE INVENTION

A packet transmitter according to the present invention having a cell generation circuit dividing an input packet to generate one or more ATM cell sequences comprises a cell header set unit referring a specific field in a packet contained in an ATM cell sequence generated by the cell generation circuit for each AAL frame and setting, in a specific field in each ATM cell header corresponding to the specific field in the packet, a value of the specific field in the ATM cell header corresponding to the value of the specific field in the packet for each AAL frame.

With this invention, the cell header set unit refers a specific field in a packet contained in an ATM cell sequence generated by the cell generation circuit for each AAL frame and sets, in a specific field in each ATM cell header corresponding to the specific field in the packet, a value of the specific field in the ATM cell header corresponding to the value of the specific field in the packet for each AAL frame.

The packet transmitter according to the next invention further comprises, in the above invention, in the preceding section of the cell generation circuit, a traffic class set unit deciding a traffic class of the input packet based on information in the packet and a communication load condition of an ATM network and setting a value corresponding to the decided traffic class in the specific field in the input packet.

With this invention, in the preceding section of the cell generation circuit, the traffic class set unit decides a traffic class of the input packet based on information in the packet and a communication load condition of an ATM network and sets a value corresponding to the decided traffic class in the specific field in the input packet. This traffic class set in the specific field in the input packet is referred at the time of ATM transmission, and priority control in which the traffic class is reflected is performed for each AAL frame.

The packet transmitter according to the next invention wherein, in the above invention, the cell header set unit resets a value of an error detection code or an error correction code in the ATM cell header after the value of the specific field in the ATM cell header corresponding to the value of the specific field in the packet is set.

With this invention, the cell header set unit resets a value of an error detection code or an error correction code in the ATM cell header after the value of the specific field in the ATM cell header corresponding to the value of the specific field in the packet is set.

The packet transmitter according to the next invention wherein, in the above invention, the transmitter further comprises a reset unit resetting the value of the specific field in the packet after the cell header set unit sets the value of the specific field in the ATM cell header corresponding to the value of the specific field in the packet.

With this invention, the reset unit resets the value of the specific field in the packet after the value of the specific field in the ATM cell header corresponding to the value of the specific field in the packet is set.

The packet transmitter according to the next invention is characterized in that in the above invention, the reset unit resets the value of the error detection code or the error correction code in the packet and/or an AAL frame containing the packet after resetting the value of the specific field in the packet.

With this invention, the reset unit resets the value of the error detection code or the error correction code in the packet and/or an AAL frame containing the packet after resetting the value of the specific field in the packet.

The packet transmitter according to the next invention is characterized in that in the above invention, the input packet is an IP packet, the specific field in the packet is a service type of IP version 4, and the specific field in the ATM cell header is a cell loss priority.

With this invention, the input packet is an IP packet, the specific field in the packet is a service type of IP version 4, and the specific field in the ATM cell header is a cell loss priority.

The packet transmitter according to the next invention is characterized in that in the above invention, the input packet is an IP packet, the specific field in the packet is a traffic class of IP version 6, and the specific field in the ATM cell header is a cell loss priority.

With this invention, the input packet is an IP packet, the specific field in the packet is a traffic class of IP version 6, and the specific field in the ATM cell header is a cell loss priority.

The packet transmitter according to the next invention is characterized in that in the above invention, the input packet is a packet of various protocols encapsulated by LLC/SNAP format, the specific field in the packet is an LLC/SNAP field, and the specific field in the ATM cell header is a cell loss priority.

With this invention, the input packet is a packet of various protocols encapsulated by LLC/SNAP format, the specific field in the packet is an LLC/SNAP field, and the specific field in the ATM cell header is a cell loss priority.

### BRIEF DESCRIPTION OF THE DRAWINGS

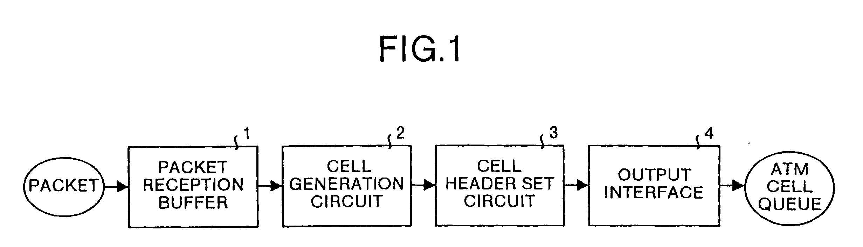

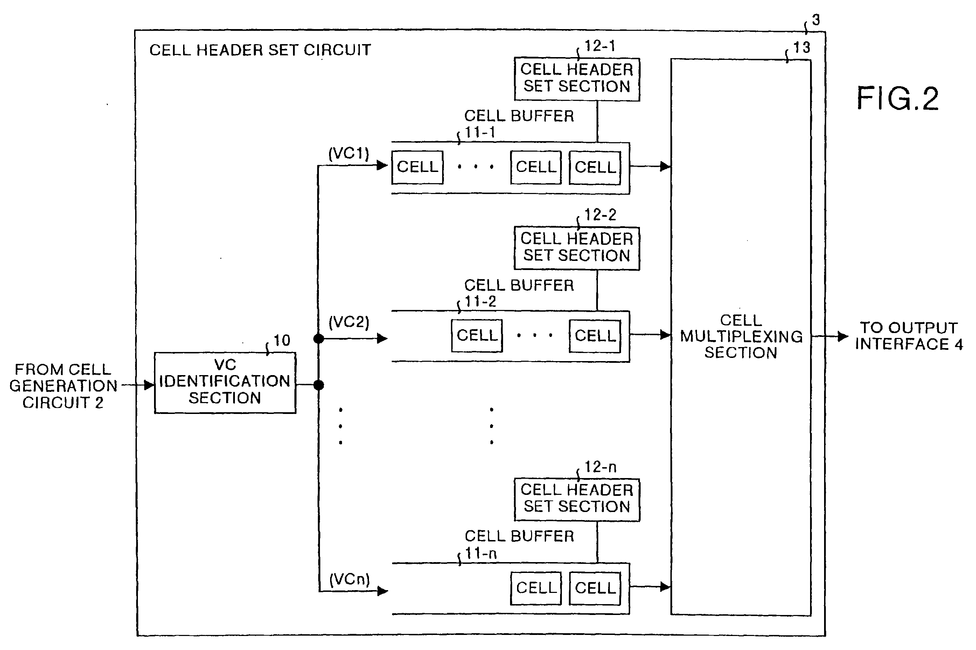

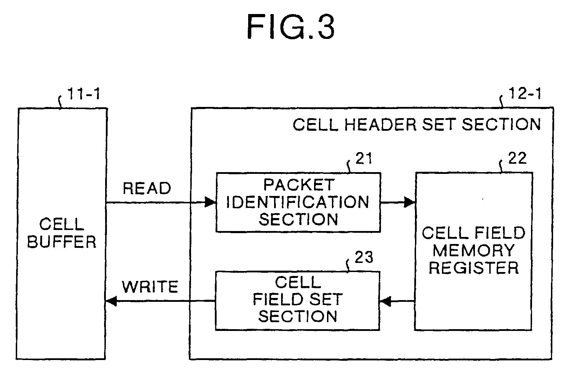

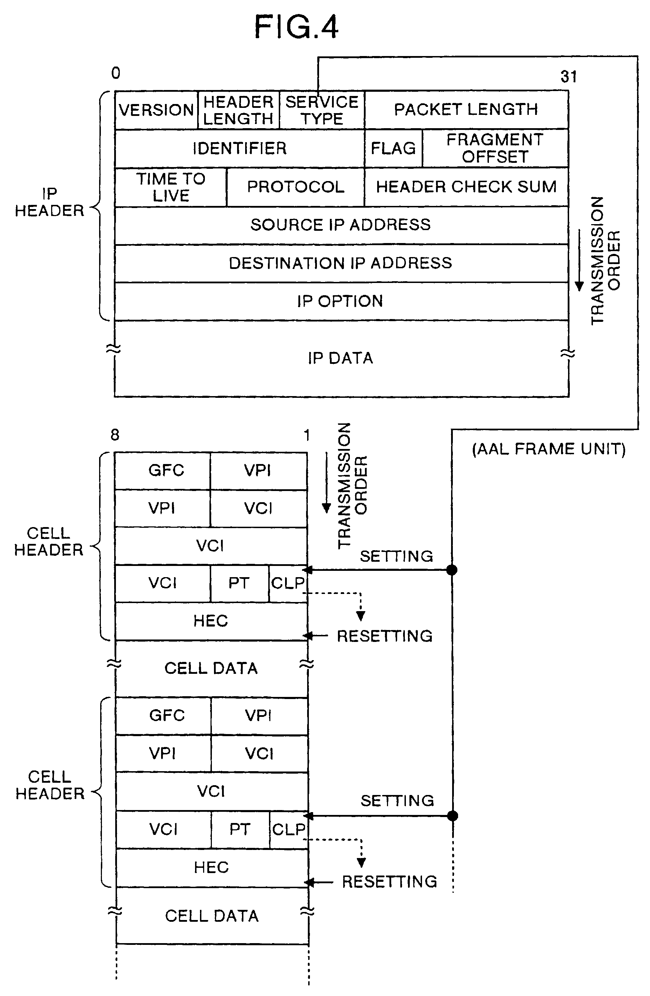

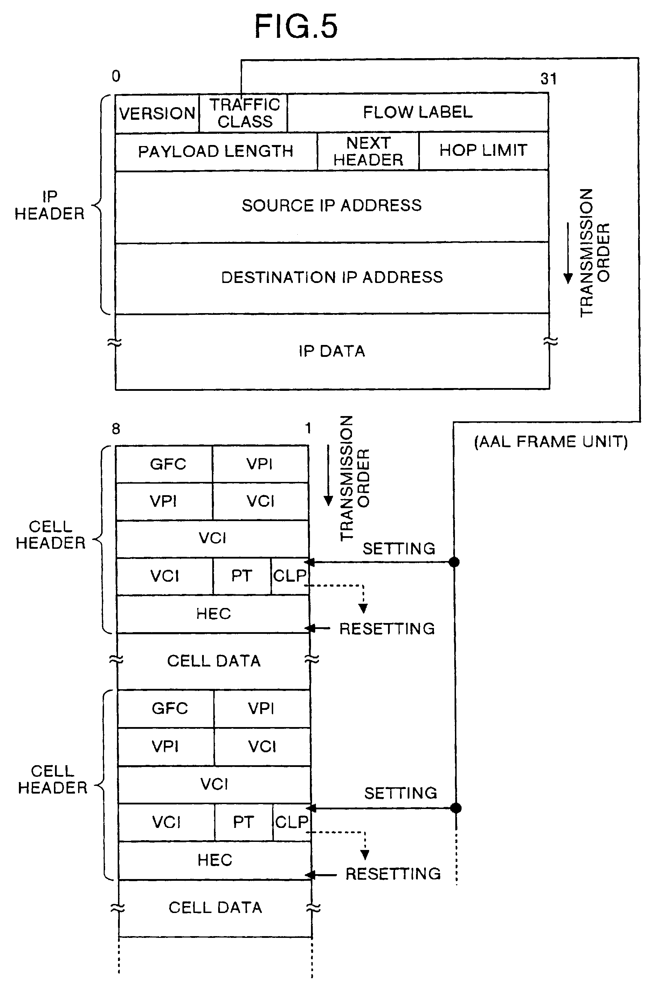

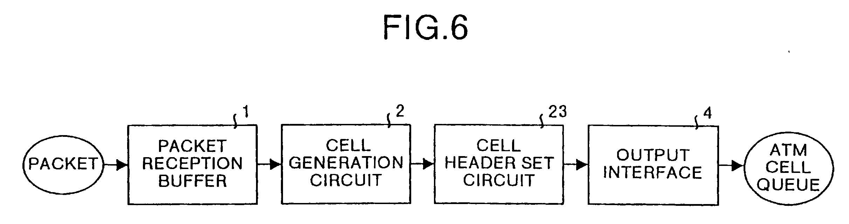

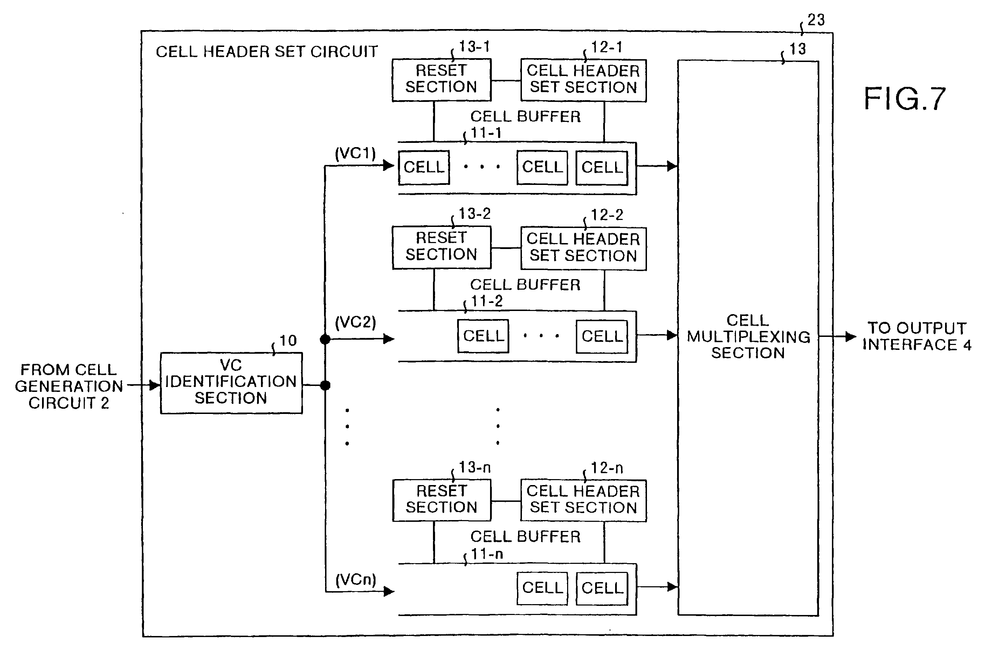

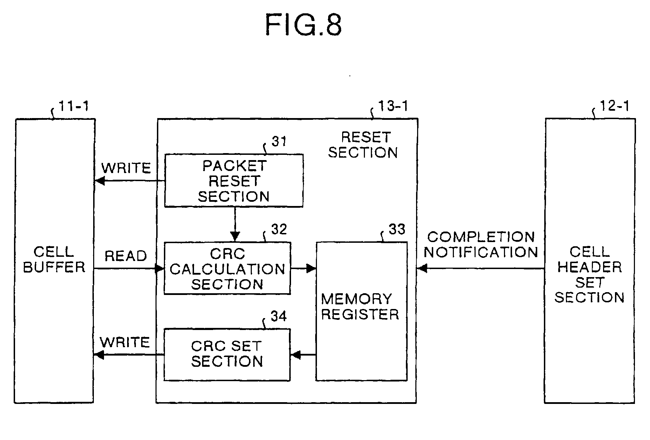

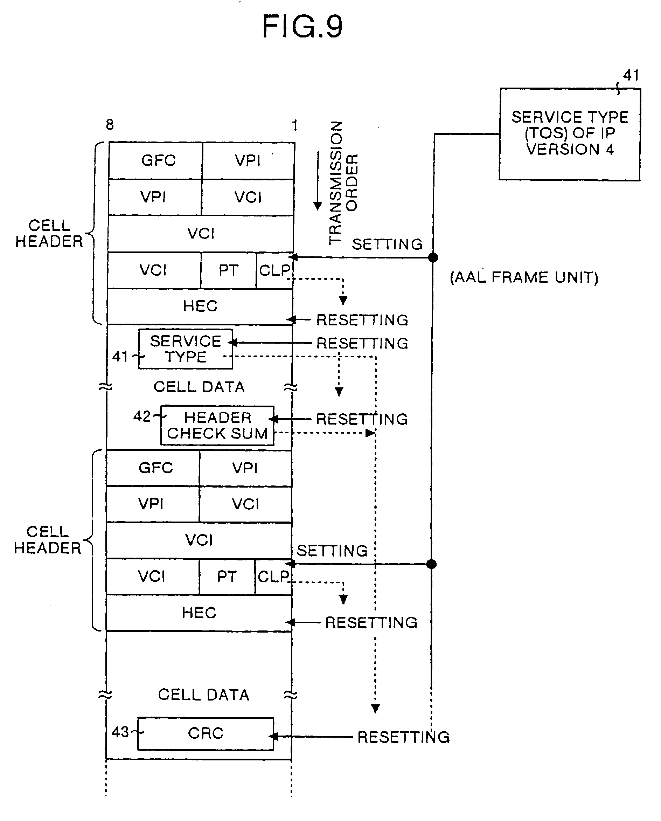

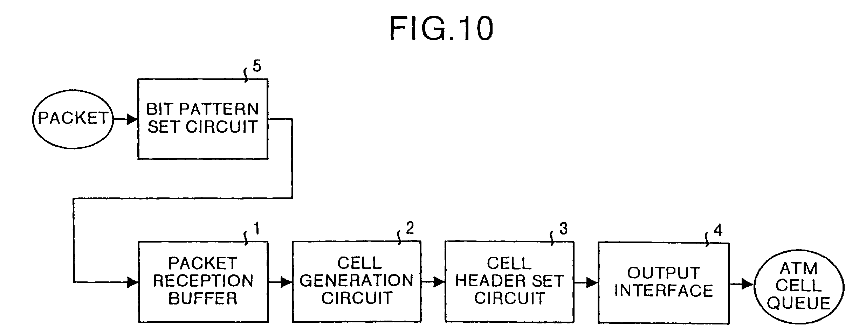

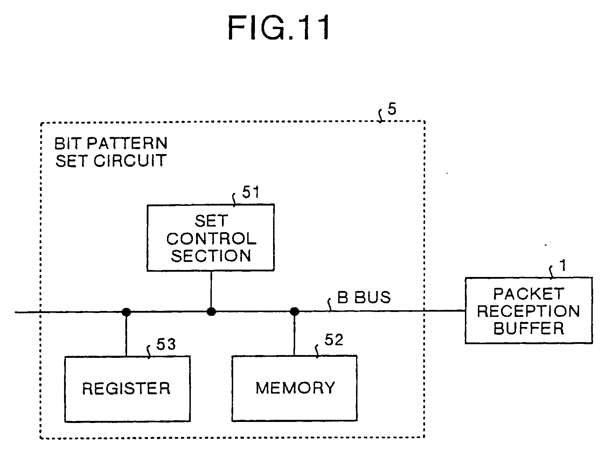

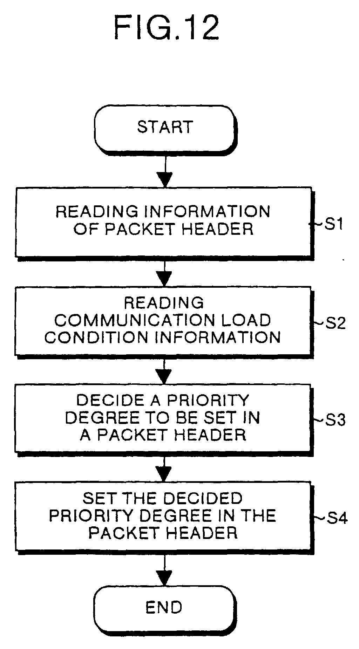

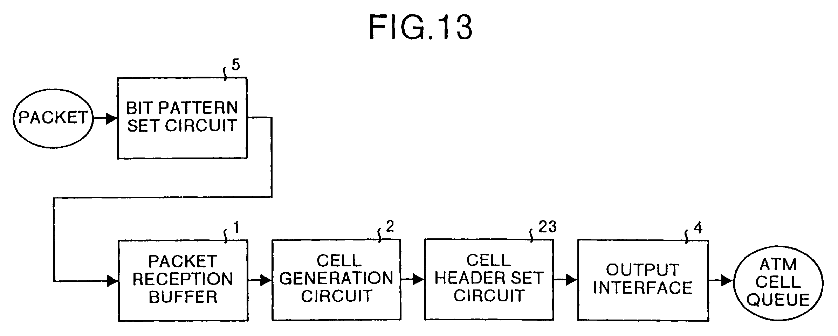

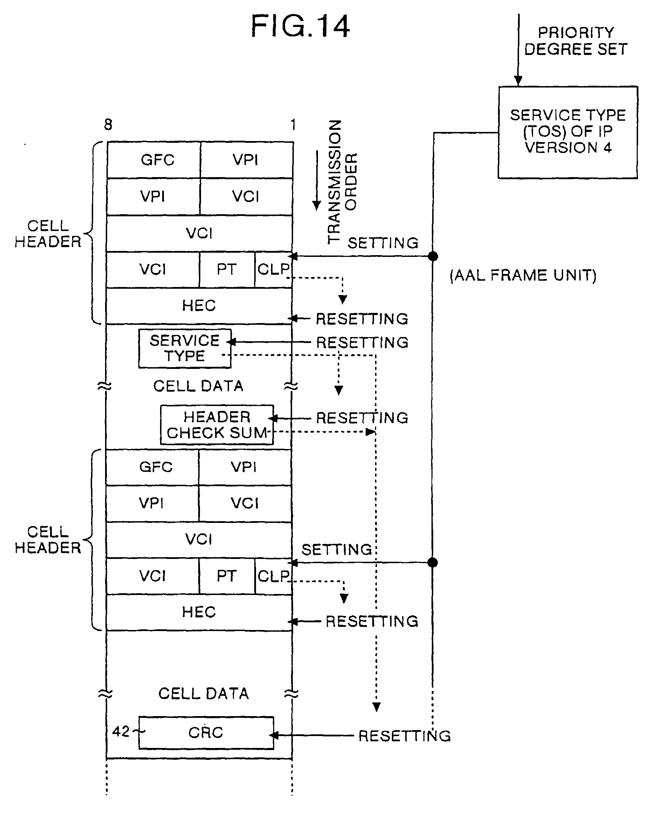

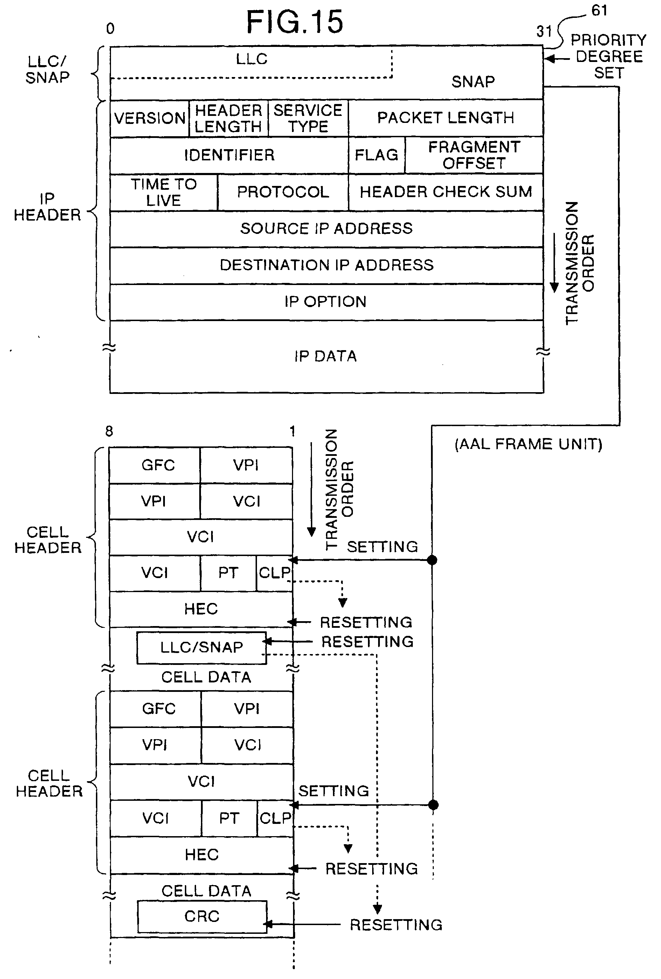

Fig. 1 is a block diagram showing an outlined configuration of a packet transmitter of a first embodiment of the present invention; Fig. 2 is a block diagram showing a detailed configuration of a cell header set circuit of the first embodiment of the present invention; Fig. 3 is a block diagram showing a detailed configuration of a cell header set section of the first embodiment of the present invention; Fig. 4 is a view showing an example of a packet applied to the first embodiment of the present invention; Fig. 5 is a view showing an example of a packet applied to the first embodiment of the present invention; Fig. 6 is a block diagram showing an outlined configuration of a packet transmitter of a second embodiment of the present invention; Fig. 7 is a block diagram showing a detailed configuration of a cell header set circuit of the second embodiment of the present invention; Fig. 8 is a block diagram showing a detailed configuration of a reset section of the second embodiment of the present invention; Fig. 9 is a view showing an example of a packet applied to the second embodiment of the present invention; Fig. 10 is a block diagram showing an outlined configuration of a packet transmitter of a third embodiment of the present invention; Fig. 11 is a block diagram showing a detailed configuration of a bit pattern set circuit of the third embodiment of the present invention; Fig. 12 is a flowchart showing a bit pattern set processing order by the bit pattern set circuit of the third embodiment of the present invention; Fig. 13 is a block diagram showing an outlined configuration of a packet transmitter of a fourth embodiment of the present invention; Fig. 14 is a view showing an example of a packet applied to the fourth embodiment of the present invention; Fig. 15 is a view showing an example of a packet applied to the fourth embodiment of the present invention; Fig. 16 is a view showing a relationship between a packet and an AAL-5 frame; Fig. 17 is a view showing a structure of an ATM cell; and Fig. 18 is a block diagram showing a configuration of a conventional cell generation circuit.

### BEST MODE FOR CARRYING OUT THE INVENTION

Preferred embodiments of a packet transmitter according to the present invention will be explained in detail below while referring to the accompanying drawings.

First, a first embodiment of the present invention will be explained. Fig. 1 is a block diagram showing the entire configuration of a packet transmitter of the first embodiment of the present invention. As shown in Fig. 1, a packet reception buffer 1 stores a packet to be transmitted. A cell generation circuit 2 has the same configuration as that of the cell generation circuit shown in Fig. 18 described above and generates an ATM cell sequence composed of one or more ATM cells from the packet. A cell header set circuit 3 is arranged as the latter section of the cell generation circuit 2 and sets the value of the CLP of an ATM cell fed from the cell generation circuit 2 at an appropriate value corresponding to packet information that is transformed to the ATM cell sequence. An output interface 4 transmits the ATM cell in which the CLP is appropriately set by the cell header set circuit to an ATM network.

In the packet transmitter shown in Fig. 1, a packet to be transmitted is first stored in the packet reception buffer 1. Then, the cell generation circuit 2 reads the packet from the packet reception buffer 1 and generates a cell sequence constituting the AAL-5 frame to output. At this time, the cell generation circuit 2 may intermingle plural AAL-5 frames to multiplex them to a VC unit to output them.

This cell sequence is inputted in the cell header set circuit 3. The cell header set circuit 3 separates the cell sequence for each AAL-5 frame and sets a value of a specific field in a cell header for each AAL-5 frame based on the bit pattern of the specific field in the packet in the AAL-5 frame so as to output it to the output interface 4.

Fig. 2 is a block diagram showing a detailed configuration of a cell header set circuit 3 shown in Fig. 1. In Fig. 2, a VC identification section 10 separates multiplexed plural AAL-5 frames for each VC (virtual channel). Cell buffers 11-1 to 11-n are n cell buffers temporarily storing cells constituting the AAL-5 frame separated for each VC. A cell multiplexing section 13 reads cells from the cell buffers 11-1 to 11-n by timing defined for each VC to perform multiplexing for the cells. Cell header set sections 12-1 to 12-n are provided corresponding to the cell buffers 11-1 to 11-n, respectively, and perform setting for cell headers in the respective cell buffers 11-1 to 11-n for each AAL-5 frame.

The cell sequences input by the cell generation circuit 2 into the cell header set circuit 3 are, in general, in the form in which a plurality of frames AAL5 having different VPI/VCI values are multiplexed in units of cells. Accordingly, the VC identification section 10 separates the cell sequences based on their VPI/VCI values. The separated cell sequences are stored in the cell buffers 11-1 to 11-n.

When cells are stored in the cell buffers 11-1 to 11-n corresponding to the respective cell header set section 12-1 to 12-n, the cell header set section 12-1 to 12-n refer to a specific field of a packet contained in each cell and decide a value to be set in the specific field in the cell header corresponding to this specific field so as to set this decided value in the cell header. The cell multiplexing section 13 reads the cell in which setting for the cell header has finished one by one from the cell buffers 11-1 to 11-n and multiplexes it for each cell to output it to the output interface 4.

Fig. 3 is a block diagram showing a detailed configuration of the cell header set Section 12-1 shown in Fig. 2. A packet identification section 21 identifies the head and the end of an AAL-5 frame and refers to a specific field of a packet in the AAL-5 frame so as to decide a value of the specific field in the corresponding header. A cell field memory register 22 stores the value that the packet identification section 21 has decided. A cell field set section 23 sets the value that the cell field memory register 22 stores in a specific field of the cell header. Other cell header set sections 12-2 to 12-n have the same configuration as that of the cell header set section 12-1.

This cell header set section 12-1 monitors the condition in the cell buffer 11-1 and first identifies whether the cell is of the head or the middle or the end of the AAL-5 frame by the packet identification section 21 when writing is performed for the cell. When the cell is of the head of the AAL-5, a specific field of the packet in the AAL-5 frame is referred. This is because the packet headers of Layer 3 or Layer 4 are typically included in the head of an AAL-5 frame when this specific field is a field in the packet header.

Accordingly, typically, only the cell data of the head cell may be referred. When this specific field is not contained in the head cell but in the following cell, this following cell is referred after the following cell is written in the cell buffer 11-1. That is, when the specific field of a packet in the cell data is referred, for example, a corresponding relationship between the bit pattern of the specific field referred and the value of the specific field of the cell corresponding to this bit pattern is applied in advance, and based on this corresponding relationship, the value of the specific field in the cell header corresponding to the bit pattern of the specific field referred is decided so that this decided value is written in the cell field memory register 22.

The cell field set section 23 reads the cell field memory register 22 after the value is written in the cell field memory register 22 and sets this read value in the specific field of the cell header in the cell in the cell buffer 11-1. With this setting, when the value of the specific field of the cell header is rewritten, the cell field set section 23 recalculates and sets a check sum or a CRC of the cell header.

The packet identification section 21 detects the head of the AAL-5 frame and writes the value in the cell field memory register 22 one time. After that, if the cell temporarily stored in the cell buffer 11-1 is the middle cell of an AAL-5 frame, nothing takes place. When the cell temporarily stored in the cell buffer 11-1 is the end cell of an AAL-5 frame, the value of the cell field memory register 22 is cleared. However, for the cell header of this last cell, timing for the clearing is controlled so that the value prior to the clearing is set by the cell field set section 23.

Here, a concrete example of a specific field in an AAL-5 frame and a specific field in a cell header is shown and explained, referring to Fig. 4 and Fig. 5. In Fig. 4, a packet of the IP (Internet Protocol) is employed, and a service type (TOS: Type Of Service (8 bits)) in the IP header of IP version 4 is employed as a specific field in a packet. A CLP (Cell Loss Priority) in a cell header is employed as a specific field in a cell header.

In the service type, information showing service quality of the IP is entered. Zero to second bits correspond to information related to precedence, and third bit corresponds to information related to delay, specifically normal delay when it is 0, and low delay when it is 1. Fourth bit corresponds to information related to a throughput, specifically to normal throughput when it is 0, and high throughput when it is 1. Fifth bit is information related to reliability, specifically to normal reliability when it is 0, and high reliability when it is 1. Sixth and seventh bits are extra bits. Since standardization activities for reexamining the directions for using information in a service type have been done, it is possible that directions for using a service type changes in the future. The CLP is a priority indication for each cell related to a loss and is indicated by 1 bit, specifically by 0 when the cell has high priority and 1 when the cell has low priority.

Both the service type of IP version 4 and the CLP in a cell header are information related to a traffic class, and the cell header set sections 12-1 to 12-n are set so as to give them a corresponding relationship with values by which the relationship therebetween can be comfortably maintained. Since setting of HEC relative to a cell header changes when the value of the CLP in a cell header is changed, the CRC is recalculated to reset.

In Fig. 5, a packet of the IP is employed as a packet, and a priority of the IP header of IP version 6 is employed as a specific field in a packet. For example, a traffic class is indicated by 4 bits, specifically by the values of 0 to 7 for defining with respect to a non-real time packet or traffic that is congestion controlled and by the values of 8 to 15 for defining with respect to real time packet traffic. That is, in this traffic class, a traffic class is set. The directions for using this traffic class are also on the way to standardization, and it is possible that the directions are modified in the future.

Both the traffic class of this IP version 6 and the CLP in the cell header are information related to a traffic class, and the cell header set sections 12-1 to 12-n are set so as to give them a corresponding relationship with values by which the relationship therebetween can be comfortably maintained. Since setting of HEC relative to a cell header changes when the value of a CLP in a cell header is changed, the CRC is recalculated to reset.

In the first embodiment, since a specific field of a packet and a specific field of a cell header are set by making them correspond to each other for each AAL frame, priority control for each packet at the time of transmitting a packet for an ATM network becomes possible while following a standard protocol by making the specific field into information related to a traffic class.

Next, a second embodiment of the present invention will be explained. In the second embodiment, in addition to the setting of the value of a specific field in a cell header in the first embodiment, a specific field in a packet made correspond to such specific field is reset. Accompanied with this resetting, the check sum or the CRC of an AAL-5 frame is reset.

Fig. 6 is a block diagram showing an entire configuration of a packet transmitter of the second embodiment of the present invention. In this packet transmitter, the cell header set circuit 23 is provided instead of the cell header set circuit 3 of the first embodiment. Other configuration is the same as that of the first embodiment, whereby like reference numerals are attached to like sections.

Fig. 7 is a block diagram showing a detailed configuration of the cell header set circuit 23. Reset sections 13-1 to 13-n are added to the configuration of the first embodiment. In Fig. 7, the VC identification section 10 separates multiplexed plural AAL-5 frames for each VC (virtual channel). The cell buffers 11-1 to 11-n are n cell buffers temporarily storing cells constituting the AAL-5 frame separated for each VC.

The cell multiplexing section 13 reads cells from the cell buffers 11-1 to 11-n by timing defined for each VC to perform multiplexing for the cells. The cell header set sections 12-1 to 12-n are provided corresponding to the cell buffers 11-1 to 11-n, respectively, and perform setting of the cell headers in the respective cell buffers 11-1 to 11-n for each AAL-5 frame. The reset sections 13-1 to 13-n reset a specific field in a packet and the check sum or the CRC of the AAL-5 frame.

In the cell header set circuit 3, since plural AAL-5 frames having generally different VCs are multiplexed for each cell and are inputted, cell sequences inputted from the cell generation circuit 2 are separated to cell sequences belonging to the same VC and are temporarily stored in the respective cell buffers 11-1 to 11-n corresponding thereto while the VPI field and the VCI field in a cell header are referred for each cell by the VC identification section 10. When the cells are stored in the cell buffers 11-1 to 11-n corresponding to the respective cell header set section 12-1 to 12-n, the cell header set section 12-1 to 12-n refer to a specific field of a packet contained in each cell and decide a value to be set in a specific field in the cell header corresponding to that specific field so as to set this decided value in the cell header.

Thereafter, the reset sections 13-1 to 13-n respond to the operations of the cell header set sections 12-1 to 12-n to operate. The reset sections 13-1 to 13-n reset the specific field in the packet that the cell header set sections 12-1 to 12-n have referred with respect to the cell in which setting for the specific field of the cell header has finished in the order from the head cell of the AAL-5 frame, and reset the check sum or the CRC of the AAL-5 frame. The cell multiplexing section 13 reads the cell in which setting for the cell header has finished one by one from the cell buffers 11-1 to 11-n and multiplexes it for each cell to output it to the output interface 4.

Fig. 8 is a block diagram showing a detailed configuration of the cell header set section 13-1 shown in Fig. 7. In Fig. 8, a packet reset section 31 identifies a specific field in a packet to reset. A CRC calculation section 32 recalculates the check sum or the CRC of an AAL-5 frame for each cell with respect to the data of the time after resetting by the packet reset section 31. A memory register 33 stores the value of the check sum or the CRC recalculated by the CRC calculation section 32. A CRC set section 34 sets a value that the memory register 33 stores in a field of a check sum or a CRC.

The reset section 13-1 starts processing for a cell in the cell buffer 11-1 on a signal transmitted from the cell header set section 12-1 when setting of a cell header to a specific field by the cell header set section 12-1 has completed. First, the packet reset section 31 identifies a specific field in a packet and resets a value changing dynamically in dependence on a pre-decided value or a congestion condition or the like of a network in this specific field.

Then, the CRC calculation section 32 calculates the CRC based on an equation defined by ITU-T Recommendations with respect to a data portion of a cell constituting the AAL-5 frame containing a specific field of the time after this resetting and stores the calculation result in the memory register 33. Thereafter, the CRC calculation section 32 similarly stores the CRC calculation result for the middle cells of the AAL-5 frame in the memory register 33 and finishes this CRC calculation when reaching to the end cell to store this CRC value in the memory register 33.

Then, the CRC set section 34 sets the CRC value stored in the memory register 33 as a CRC value for the entire AAL-5 frame in a CRC field at the time of reaching to the end cell of the AAL frame.

Here, referring to Fig. 9, resetting for a specific field in the AAL-5 frame and resetting of the CRC field accompanied therewith are explained showing concrete examples. In Fig. 9, similarly to Fig. 4, an IP packet is employed as the packet, and a service type 41 in the IP header of IP version 4 is employed as a specific field in a packet while a CLP in a cell header is employed as a specific field in a cell header. With the cell header set sections 12-1 to 12-n, the value of the CLP corresponding to the value of the service type 41 is set for each AAL-5 frame in the CLP of each cell header as shown in Fig. 4.

Thereafter, the reset sections 13-1 to 13-n reset the service type 41 in the packet and then reset a header check sum 42 in the packet header changed accompanied with the previous resetting as well as a CRC 43 relative to the entire AAL-5 frame.

Similarly, resetting can be performed also for the traffic class of the IP header of IP version 6 corresponding to Fig. 5, and accompanied with this resetting of traffic class, the value of the CRC field relative to the entire AAL-5 frame is reset.

In the second embodiment, in the same manner as the first embodiment, since a specific field of a packet and a specific field of a cell header are set by making them correspond to each other for each AAL frame, the specific field is considered as the information related to a traffic class to follow a standard protocol, and priority control for each packet at the time of transmitting the packet to an ATM network becomes possible. In addition, since this specific field of the packet can be reset, the specific field can be concealed from the ATM network, or this specific field can be employed as a field for other use at the time of transmission to the ATM network.

Next, a third embodiment of the present invention will be explained. In the third embodiment, a bit pattern set circuit 5 setting a specific bit pattern indicating a traffic class of a packet in a specific field in the packet based on an ATM communication load condition, such as information in the packet and a circuit or a communication device, is provided in the preceding section of the packet transmitter shown in the first embodiment, that is, in the preceding section of the packet reception buffer 1, as shown in Fig. 10.

Fig. 11 is a block diagram showing a detailed configuration of the bit pattern set circuit 5. In Fig. 11, a set control section 51 can be realized by a CPU and sets a bit pattern indicating a traffic class in a specific field in a packet based on information in a packet or an ATM communication load condition such as a circuit or a communication device. A program or a work area of the set control section 51 is stored in a memory 52. Information showing an ATM communication load condition such as a circuit or a communication device is stored in a register 53. A packet is stored in the packet reception buffer 1. The packet reception buffer 1, the set control section 51, the memory 52, and the register 53 are connected respectively by a bus B.

Next, a bit pattern set processing order by the bit pattern set circuit 5 will be explained, referring to the flowchart shown in Fig. 12. As shown in Fig. 12, first, the set control section 51 reads the information stored in a packet header of a packet stored in the packet reception buffer 1 (step S1). The read information is, for example, information indicating a destination address, a source address, a traffic class, and an application type.

Then, the set control section 51 reads the communication load condition information stored in the register 53 (step S2) Further, the set control section 51 decides a traffic class to be set in a specific field of the packet based on the information of the packet header and the communication load condition information that have been read (step S3). The specific bit pattern indicating the decided traffic class is set in a specific field of the packet stored in the packet reception buffer 1 (step S4) to finish the present processing.

The present processing can be similarly applied to the traffic class of the IP header of IP version 6 corresponding to Fig. 5, and setting of a bit pattern is reflected in a cell.

With the third embodiment, based on the information in a packet inputted and the communication load condition information, such as a circuit or a communication device, by setting a specific bit pattern indicating the traffic class of this packet in a specific field in this packet, this specific bit pattern is reflected by operations similar to those in the first embodiment, and a value of a field indicating the traffic class of a cell in a cell header can be set. As a result of this, priority control for each packet at the time of transmitting the packet for an ATM network can be performed surely.

Next, a fourth embodiment of the present invention will be explained. The fourth embodiment is the one in which the third embodiment is applied to the second embodiment. That is, Fig. 13 is a block diagram showing an outlined configuration of the fourth embodiment of the present invention. In the packet transmitter shown in Fig. 13, the cell header set circuit 3 in the third embodiment shown in Fig. 10 is replaced with the cell header set section 23 having the reset sections 13-1 to 13-n.

In Fig. 13, for a packet inputted, a specific bit pattern indicating the traffic class of this packet is set in a specific field in this packet based on the information in the packet inputted and the communication load condition information such as a circuit or a communication device by the bit pattern set circuit 5. In this set packet, a cell sequence is then generated by the cell generation circuit 2. The specific bit pattern set by the bit pattern set circuit 5 is reflected by the cell header set circuit 23 and is set at a value of a field indicating the traffic class of a cell in a cell header. Thereafter, the specific field in the packet is reset, and this specific field is concealed from the ATM network, or this field can be employed for other use at the time of transmission to the ATM network.

Here, a concrete example including setting of a bit pattern relative to a specific field in a packet, setting for a specific field in a cell header reflecting that setting, and resetting for a specific field in that packet will be explained referring to Fig. 14. In Fig. 14, an IP packet is employed, a service type 41 in the IP header of the IP version 4 is employed as a specific field in a packet, and a CLP in a cell header is employed as a specific field in a cell header, similarly to Fig. 9.

The bit pattern set circuit 5 sets a value of a traffic class in a field of a service type based on the information in a packet header of a packet inputted and the communication load condition information of the ATM network. Then, the cell header set circuit 23 sets a value of a CLP corresponding to the value of this service type in a CLP of each cell header. With this, the traffic class set by the bit pattern set circuit 5 is reflected in a cell.

Thereafter, the reset sections 13-1 to 13-n reset the service type in the packet, reset a header check sum in a packet header changed accompanied with that resetting, and reset a CRC relative to the entire AAL-5 frame, similar to Fig. 9.

Fig. 15 is a view showing an example of application of the fourth embodiment. The upper section in Fig. 15 shows one of the standards in which an IP version 4 packet is encapsulated in an AAL-5 frame, that is "IP routed frame" format defined by RFC 1483. The RFC is the abbreviation of "Request For Comments," and the RFC 1483 shows a recorded document number of each step of standardization work.

In Fig. 15, the bit pattern set circuit 5 decides a value of a traffic class based on the information in a packet header and the communication load condition information of the ATM network and sets this decided traffic class to an LLC/SNAP field 61 encapsulating an IP packet. The cell header set circuit 23 sets a value corresponding to a value of the LLC/SNAP field 61 in the CLP of a cell header, whereby the traffic class set in the LLC/SNAP field 61 is reflected in a cell. Similarly to the second embodiment, this LLC/SNAP field 61 is reset, and this LLC/SNAP field is concealed from the ATM network, or this LLC/SNAP field 61 can be employed for other use at the time of transmission to the ATM network.

Concretely, the packet header set circuit 23 sets "AAAA030080000800" by hexadecimal number system as the value of the LLC/SNAP field 61 if the IP packet is of a high traffic class. If the IP packet is of a low traffic class, the value of the LLC/SNAP field 61 remains as the value described in RFC 1483, that is, "AAAA030000000800" by hexadecimal number system. If the value of the LLC/SNAP field 61 is "AAAA030080000800" by hexadecimal number system, the cell header set circuit 23 sets "1" in the CLP bit of a cell in the AAL-5 frame including the packet, resets the value of the LLC/SNAP field 61 to "AAAA030000000800" by hexadecimal number system, and recalculates the CRC of the AAL-5 frame.

If the value of the LLC/SNAP field 61 is "AAAA030000000800" by hexadecimal number system, the cell header set circuit 23 sets the CLP bit of a cell in the AAL-5 frame including the packet to "0" and leaves the value of the LLC/SNAP field 61 as it is.

Bit pattern setting and resetting for the field due to the setting can be performed similarly also for the traffic class of the IP header of the IP version 6 corresponding to Fig. 5, and accompanied with the resetting, the value of the CRC field in a packet is also reset.

With the fourth embodiment, based on the information in a packet inputted and the communication load condition information such as a circuit or a communication device, by setting a specific bit pattern indicating the traffic class of the packet in a specific field in the packet, this specific bit pattern is reflected by similar operations to those of the first embodiment, and a value of a field indicating a traffic class of a cell in a cell header can be set. As a result of this, priority control for each packet at the time of transmitting a packet for the ATM network can be performed surely. In addition, since this specific field of the packet can be reset, the specific field can be concealed from the ATM network, or this specific field can be employed as a field for other use at the time of transmission to the ATM network.

As explained above, according to the present invention, the cell header unit refers a specific field in a packet contained in an ATM cell sequence generated by the cell generation circuit for each AAL frame and sets, in a specific field in each ATM cell header corresponding to the specific field in the packet, a value of the specific field in the ATM cell header corresponding to the value of the specific field in the packet for each AAL frame. Thus, an advantageous effect is produced wherein for example, even when for the cell generation unit, a traffic class of an ATM cell is fixedly set based on control information set in advance, priority control in which the traffic class set in the packet is reflected for each AAL frame can be performed at the time of ATM cell transmission.

With the next invention, in the preceding section of the cell generation circuit, a traffic class set unit decides a traffic class of the input packet based on information in the packet and a communication load condition of an ATM network and sets a value corresponding to the decided traffic class in the specific field in the input packet. This traffic class set in the specific field in the input packet is referred at the time of ATM transmission, and priority control in which that traffic class is reflected is performed for each AAL frame. Thus, an advantageous effect is produced wherein ATM cell priority control can be performed surely for each AAL frame.

With the next invention, the cell header set unit resets a value of an error detection code or an error correction code in the ATM cell header after the value of the specific field in the ATM cell header corresponding to the value of the specific field in the packet is set. Thus, an advantageous effect is produced wherein data correction accompanied with setting of the value of the specific field in the ATM cell header can be performed surely.

With the next invention, the reset unit resets the value of the specific field in the packet after the value of the specific field in the ATM cell header corresponding to the value of the specific field in the packet is set. Thus, an advantageous effect is produced wherein the specific field of the packet can be concealed, for example, for an ATM network, or this specific field can be employed for other use.

With the next invention, the reset unit resets the value of the error detection code or the error correction code in the packet and/or an AAL frame containing the packet after resetting the value of the specific field in the packet. Thus, data correction accompanied with resetting of the value of the specific field in the packet can be performed surely.

With the next invention, the input packet is an IP packet, the specific field in the packet is a service type of IP version 4, and the specific field in the ATM cell header is a cell loss priority. Thus, an advantageous effect is produced wherein priority control for each AAL frame can be performed concretely.

With the next invention, the input packet is an IP packet, the specific field in the packet is a traffic class of IP version 6, and the specific field in the ATM cell header is a cell loss priority. Thus, an advantageous effect is produced wherein priority control for each AAL frame can be performed concretely.

With the next invention, the input packet is a packet of various protocols encapsulated by LLC/SNAP format, the specific field in the packet is an LLC/SNAP field, and the specific field in the ATM cell header is a cell loss priority. Thus, an advantageous effect is produced wherein priority control for each AAL frame can be performed concretely.

### INDUSTRIAL APPLICABILITY

As described above, in a packet transmitter according to the present invention, setting for an ATM cell according to the information in an input packet or communication information of an ATM network can be performed simply, easily, and flexibly for each AAL frame, the present packet transmitter can be utilized for an ATM communication system.

## Claims

1. A packet transmitter having a cell generation circuit dividing an input packet to generate one or more ATM cell sequences, comprising:
a cell header set unit referring a specific field in a packet contained in an ATM cell sequence generated by said cell generation circuit for each AAL frame and setting, in a specific field in each ATM cell header corresponding to the specific field in the packet, a value of a specific field in an ATM cell header corresponding to the value of the specific field in the packet for each AAL frame.

2. The packet transmitter according to claim 1 further comprising, in the preceding section of said cell generation circuit, a traffic class set unit deciding a traffic class of the input packet based on information in the packet and a communication load condition of an ATM network and setting a value corresponding to the decided traffic class in the specific field in the input packet.

3. The packet transmitter according to claim 1, wherein said cell header set unit resets a value of an error detection code or an error correction code in the ATM cell header after the value of the specific field in the ATM cell header corresponding to the value of the specific field in the packet is set.

4. The packet transmitter according to claim 1 further comprising a reset unit resetting the value of the specific field in the packet after said cell header set unit sets the value of the specific field in the ATM cell header corresponding to the value of the specific field in the packet.

5. The packet transmitter according to claim 4 wherein said reset unit resets the value of the error detection code or the error correction code in the packet and/or an AAL frame containing the packet after resetting the value of the specific field in the packet.

6. The packet transmitter according to claim 1 wherein the input packet is an IP packet, the specific field in the packet is a service type of IP version 4, and the specific field in the ATM cell header is a cell loss priority.

7. The packet transmitter according to claim 1 wherein the input packet is an IP packet, the specific field in the packet is a traffic class of IP version 6, and the specific field in the ATM cell header is a cell loss priority.

8. The packet transmitter according to claim 1 wherein the input packet is a packet of various protocols encapsulated by LLC/SNAP format, the specific field in the packet is an LLC/SNAP field, and the specific field in the ATM cell header is a cell loss priority.
